# EUROPEAN PATENT SPECIFICATION

(11) **EP 2 606 720 B1**
(45) Date of publication and mention of the grant of the patent: **28.05.2014**
(21) Application number: 11009977.7
(22) Date of filing: 19.12.2011
(51) Int. Cl.: A01K 13/00

(54) **Pet grooming tool**
Fellpflegewerkzeug für Haustiere
Outil pour le toilettage des animaux domestiques

(43) Date of publication of application: 26.06.2013
(73) Proprietor: Wang, Huo-Pia, Yen-Ping Li, Chang-Hua City (TW)
(72) Inventor: Wang, Huo-Pia, Yen-Ping Li, Chang-Hua City (TW)
(74) Representative: Schütte, Hartmut

(56) References cited:
- DE-U1- 20 320 281
- US-A- 2 431 180
- US-A1- 2005 081 875
- US-B2- 7 717 067

## Description

This invention relates to a pet grooming tool, more particularly to a pet grooming tool which can be used to cut hair mats of pets when grooming.

A variety of pet grooming tools, such as grooming brushes, combs, clippers, etc, are commercially available for grooming pets and removing tangled and matted hair. Referring to Figs. 1 and 2, a conventional pet grooming tool as disclosed in U.S. Patent No. 7,717,067 B2 is shown to include a handle portion 1 and a pet engageable portion 2. A plurality of teeth 201 are formed in a row along the bottom of the pet engageable portion 2, and an acute edge 202 is formed between two adjacent ones of the teeth 201. Such pet grooming tool can only be utilized for grooming a short-hair pet due to the dense arrangement of the short teeth 201, and can not access the undercoat of a pet.

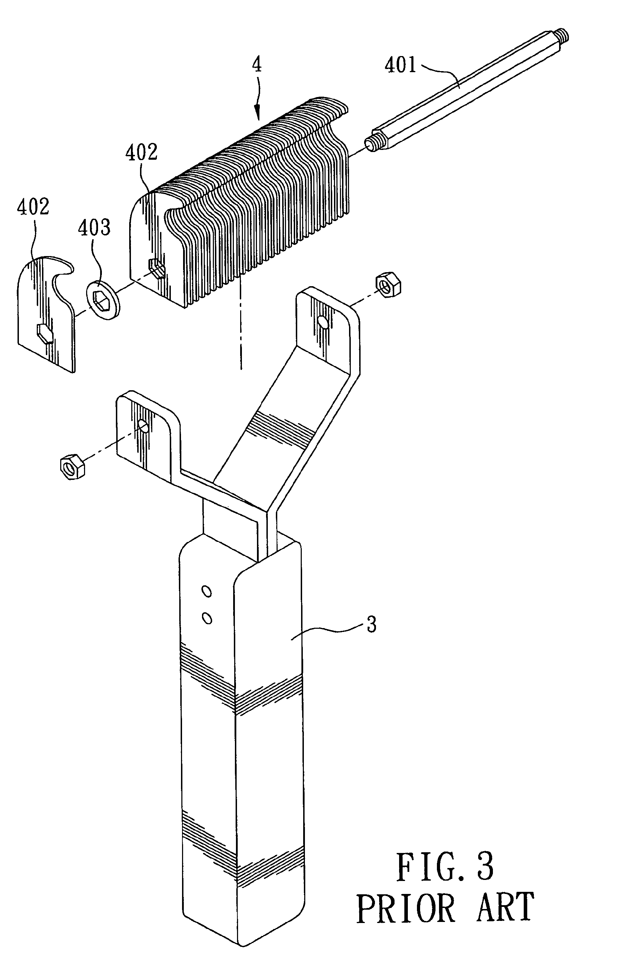

Referring to Fig. 3, another conventional pet grooming tool includes a longitudinal handle 3 and a pet engageable assembly 4 which has a plurality of flat tines 402 sleeved on a mounting shaft 401 to be secured between two lug ends of the handle 3. A spacer 403 is interposed between every two adjacent ones of the flat tines 402. Such pet grooming tool can only be utilized to brush or comb a pet and cannot deal with tangled and matted hair of the pet. Hence, a cutting tool is additionally needed when grooming a pet. It is quite difficult for a user to perform a grooming operation with one hand holding two separate tools and the other hand holding and comforting the pet.

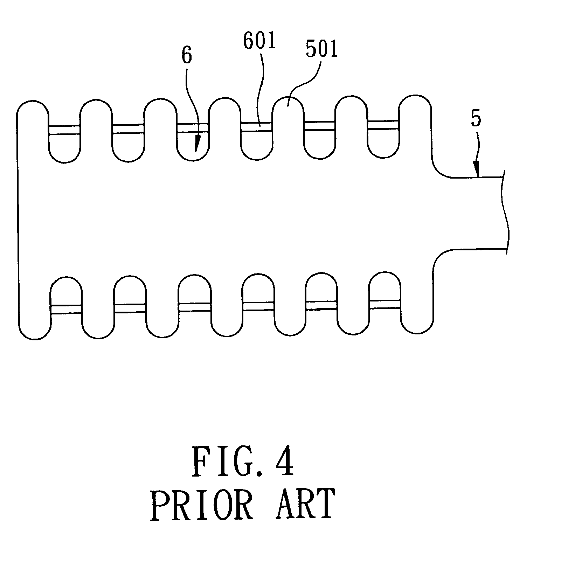

Referring to Fig. 4, still another conventional pet grooming tool is in the form of a cutter which has a cutting blade 6 mounted on a comb body 5. Each of cutting edges 601 is exposed between teeth 501 of the comb body 5. Such pet grooming tool can only be utilized to cut the ends of hair, and may cause over-cutting.

Similar grooming tools are described in documents DE-U1-20320281 and US-A1-2005/081875.

An object of the present invention is to provide a pet grooming tool which can be used to cut tangles or mats of pet hair when grooming so that the grooming operation can be performed conveniently.

According to this invention, the pet grooming tool includes two holding arms respectively having two lug ends which are spaced apart from each other, a mounting shaft extending along a shaft axis to terminate at two journals which are secured to the lug ends, a plurality of tine members, each made from a first flat blank which is oriented normal to the shaft axis, and which has a raking region, a base region having a mounting hole that permits the mounting shaft to be inserted fittingly thereinto such that the tine members are juxtaposed with one another between the lug ends, a front edge surface extending from the base region toward the raking region to terminate at a front spot, and a rear edge surface extending from the base region toward the raking region to join with the front edge surface at the front spot to form a tine tip of a respective one of the tine members, and a plurality of dematting members, each made from a second flat blank which has forward and rearward edge surfaces, and which is oriented normal to the shaft axis. The second flat blank has dematting blade and mount regions opposite to each other. The dematting blade region extends to terminate at an inclined distal edge surface which joins the forward and rearward edge surfaces, respectively, at a forward spot and a rearward spot that is closer to the mount region than the forward spot. The dematting blade region has a blade cutout portion which extends from the inclined distal edge surface adjacent to the forward spot toward the mount region to form a dematting blade tip of a respective one of the dematting members. The mount region has a mount bore configured to permit the mounting shaft to be inserted fittingly thereinto such that each of the first tine members is interposed between two adjacent ones of the dematting members, and such that the dematting blade tip is disposed rearward from the first tine tip.

The pet grooming tool will rake or comb a pet by means of the tine members while cutting and removing tangles and mats of the undercoat of the pet by means of the dematting members.

Other features and advantages of the present invention will become apparent in the following detailed description of the preferred embodiments of the invention, with reference to the accompanying drawings, in which:

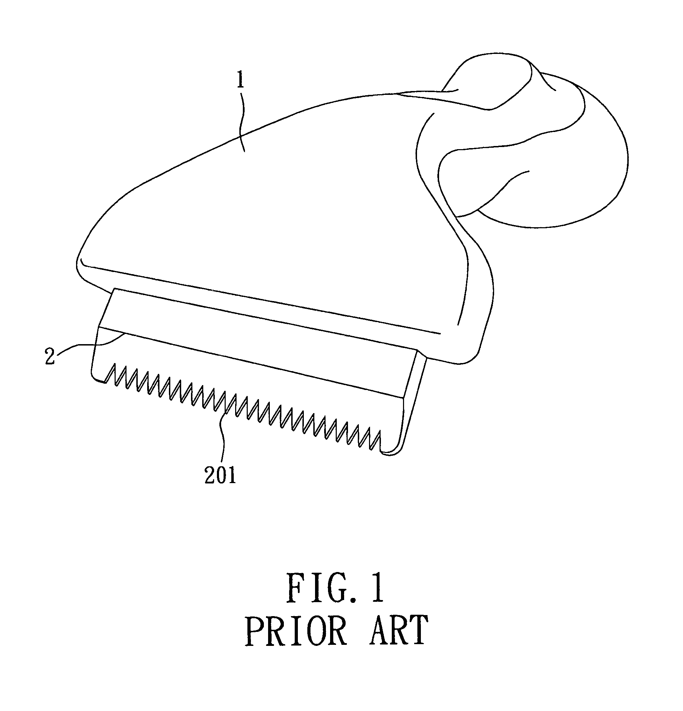

Fig. 1 is a perspective view of a conventional pet grooming tool disclosed in U.S. Patent No. 7,717,067 B2;

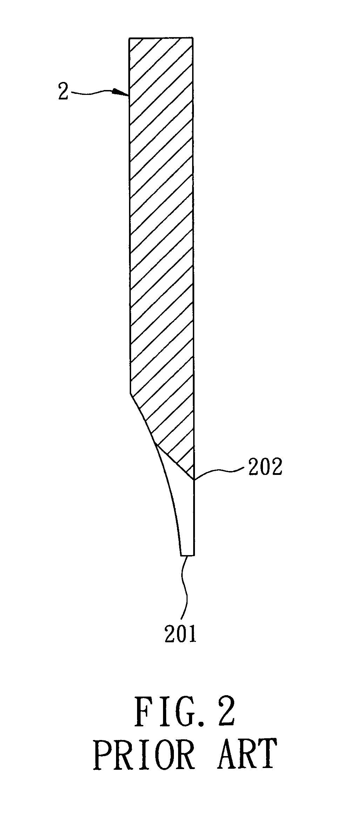

Fig. 2 is a sectional view of a tooth of the conventional pet grooming tool in Fig. 1;
Fig. 3 is an exploded perspective view of another conventional pet grooming tool;
Fig. 4 is a plan view of still another conventional pet grooming tool;
Fig. 5 is an exploded perspective view of a first embodiment of a pet grooming tool according to this invention;
Fig. 6 is a sectional view of the first embodiment;
Fig. 7 is a cross-sectional view taken along line VII-VII of Fig. 6;
Fig. 8 is an exploded perspective view of a second embodiment of a pet grooming tool according to this invention;
Fig. 9 is a sectional view of the second embodiment;
Fig. 10 is a cross-sectional view taken along line X-X of Fig. 9;
Fig. 11 is an exploded perspective view of a third embodiment of a pet grooming tool according to this invention;
Fig. 12 is a sectional view of the third embodiment; and
Fig. 13 is a cross-sectional view taken along line XIII-XIII of Fig. 12.

Before the present invention is described in greater detail, it should be noted that same reference numerals have been used to denote like elements throughout the specification.

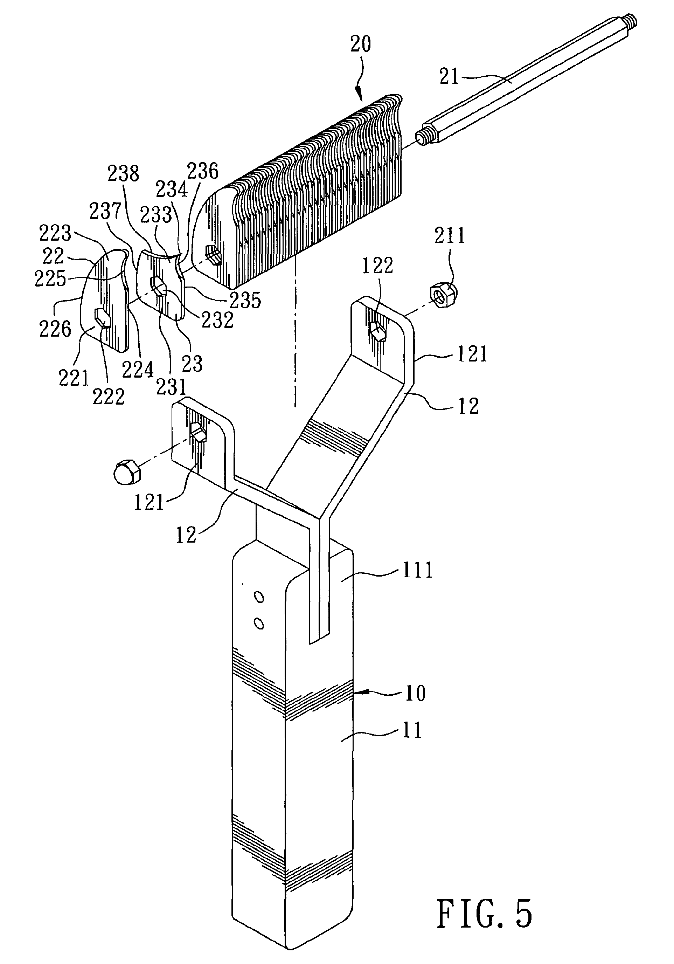

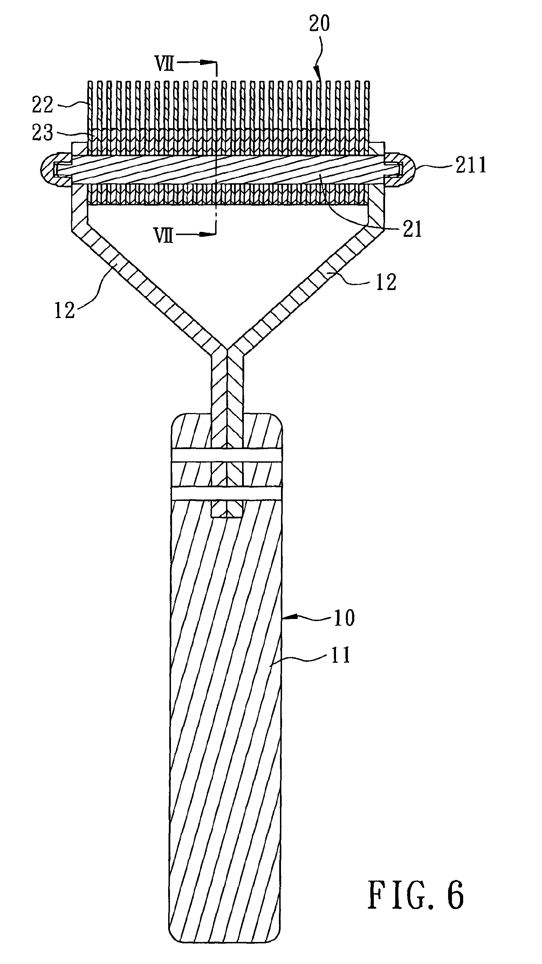

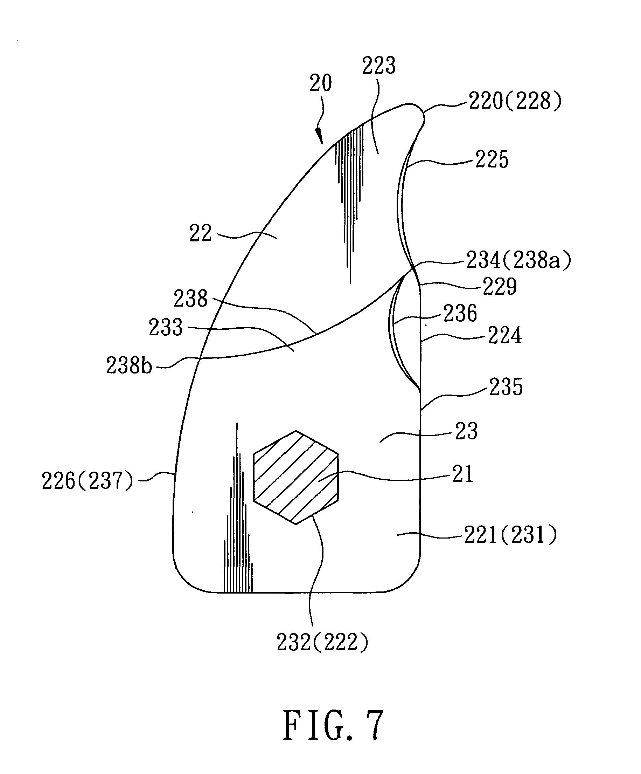

Referring to Figs. 5 to 7, the first embodiment of a pet grooming tool according to the present invention is shown to comprise a handle assembly 10 and a pet engageable assembly 20.

The handle assembly 10 has a handle 11 which has a connected end 111 and which extends from the connected end 111 in a longitudinal direction to be manually operable, and two holding arms 12 which are connected to the connected end 111 and which extend to respectively have two lug ends 121. The lug ends 121 are spaced apart from each other in a first transverse direction that is transverse to the longitudinal direction and respectively have hexagonal holes 122.

The pet engageable assembly 20 includes a mounting shaft 21, a plurality of first tine members 22, and a plurality of dematting members 23.

The mounting shaft 21 has a hexagonal cross-section and extends along a shaft axis in the first transverse direction to terminate at two threaded journals which are secured to the hexagonal holes 122 along the shaft axis by screw nuts 211.

The first tine members 22 and the dematting members 23 are juxtaposed with and alternately arranged with each other in a row of the first transverse direction. Each of the first tine members 22 is made from a first flat blank which is oriented normal to the shaft axis, and which has first raking and base regions 223, 221 opposite to each other in the longitudinal direction. The first flat blank has a first front edge surface 224 which extends from the first base region 221 toward the first raking region 223 in the longitudinal direction to terminate at a front spot 228, and a first rear edge surface 226 which is opposite to the first front edge surface 224 in a second transverse direction that is transverse to the longitudinal and first transverse directions, and which extends from the first base region 221 toward the first raking region 223 to join with the first front edge surface 224 at the front spot 228 to form a first tine tip 220 of the respective first tine member 22. The first base region 221 has a hexagonal first mounting hole 222 which permits the mounting shaft 21 to be inserted fittingly thereinto such that the first tine members 22 are juxtaposed with one another between the lug ends 121. In this embodiment, the first raking region 223 of each first tine member 22 has a tine cutout portion 225 which extends immediately from the first tine tip 220 toward the first base region 221 and which is arcuated and concaved rearwardly so as to render the first tine tip 220 more forwardly protruding and to terminate at a first juncture spot 229 on the first front edge surface 224. The first tine tip 220 is rounded so as to prevent injury to a user, a pet and bystanders.

Each of the dematting members 23 is made from a second flat blank which has forward and rearward edge surfaces 235, 237 opposite to each other in the second transverse direction, and which is oriented normal to the shaft axis. The second flat blank has dematting blade and mount regions 233, 231 opposite to each other in the longitudinal direction. The dematting blade region 233 extends in the longitudinal direction to terminate at an inclined distal edge surface 238 which joins the forward and rearward edge surfaces 235, 237, respectively, at a forward spot (238a) and a rearward spot (238b) that is closer to the mount region 231 than the forward spot (238a). The dematting blade region 233 has a blade cutout portion 236 which extends from the inclined distal edge surface 238 adjacent to the forward spot (238a) toward the mount region 231 to form a dematting blade tip 234 of a respective one of the dematting members 23. The blade cutout portion 236 is arcuated and concaved rearwardly. The mount region 231 has a hexagonal mount bore 232 which permits the mounting shaft 21 to be inserted fittingly thereinto such that each of the first tine members 22 is interposed between two adj acent ones of the dematting members 23. The dematting blade tip 234 is disposed rearward from the first juncture spot 229 for preventing damage to a user and a pet.

In use, the user grips the handle 11 to rake or comb a pet by means of the first tine members 22 to initially separate tangles or mats. Immediately thereafter, tangles or mats near to the undercoat of a pet can be smoothly cut and removed from the pet fur by means of the dematting blade tips 234 during the operation. Therefore, the pet grooming tool of this embodiment can be utilized to groom a pet while cutting and removing mats and can prevent overcutting. The pet grooming tool according to this embodiment is suitable for middle and short-hair pets.

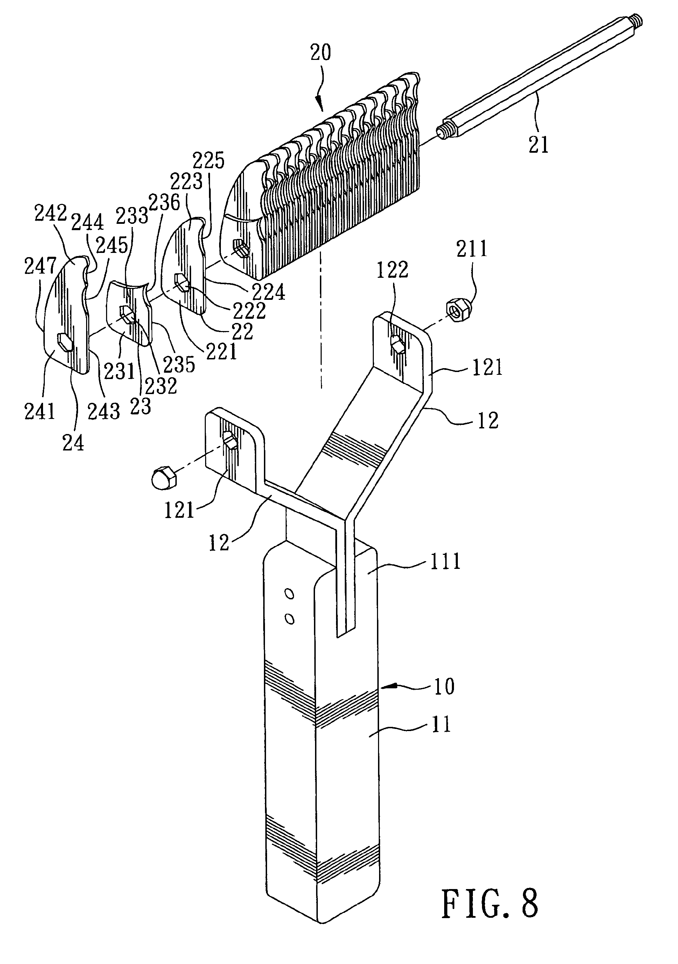

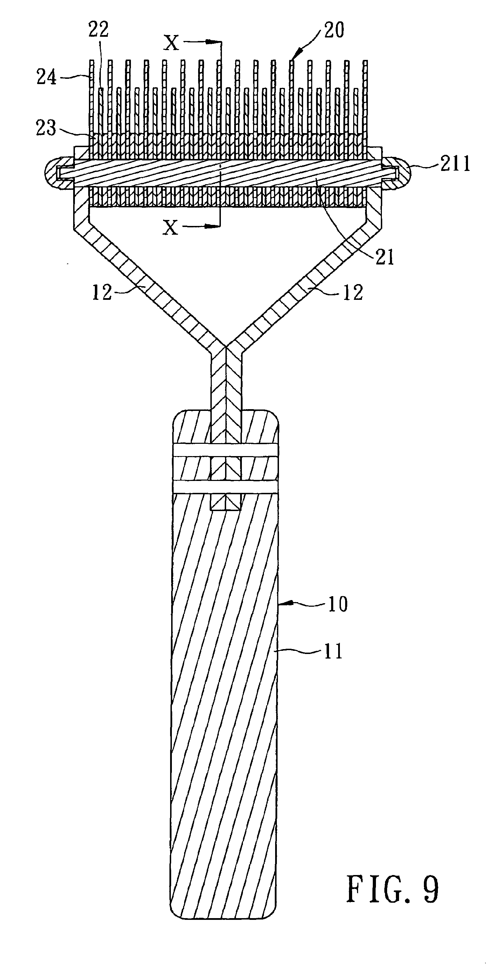

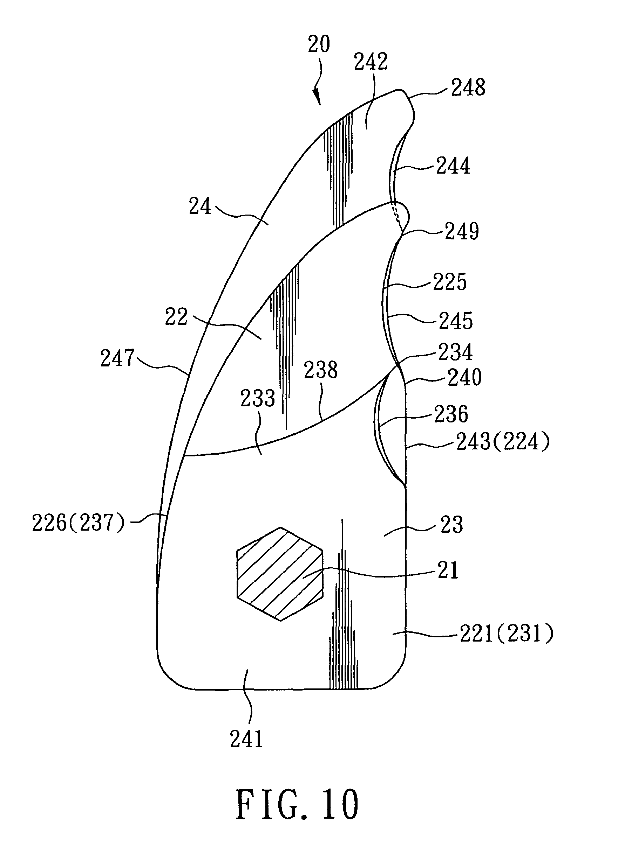

Referring to Figs. 8 to 10, the second embodiment of the pet grooming tool according to this invention is similar to the first embodiment. In the second embodiment, the pet engageable assembly 20 further includes a plurality of second tine members 24, each interposed between two adjacent ones of the dematting members 23 such that each of the dematting members 23 is interposed between one of the first tine members 22 and an adjacent one of the second tine members 24. Each second tine member 24 is made from a third flat blank which has second front and rear edge surfaces 243, 247 opposite to each other in the second transverse direction, and which is oriented normal to the shaft axis of the mounting shaft 21. The third flat blank has second raking and base regions 242, 241 opposite to each other in the longitudinal direction such that the second front edge surface 243 extends from the second base region 241 toward the second raking region 242 to terminate at a distal spot 248 on the second rear edge surface 247. The second raking region 242 has an initial cutout portion 244 extending immediately from the distal spot 248 toward the second base region 241 to terminate at a proximate spot 249 on the second front edge surface 243, and an ending cutout portion 245 extending immediately from the proximate spot 249 toward the second base region 241 to terminate at a second juncture spot 240 which is disposed forwardly from the dematting blade tip 234. The ending cutout portion 245 is configured to be flush with the tine cutout portion 225 in the first transverse direction. Each of the initial and ending cutout portions 244, 245 is also arcuated and concaved rearwardly.

Accordingly, when raking or combing a pet using the pet grooming tool of this embodiment, tangles or mats of fur at different length positions can be initially and successively separated by the distal and proximate spots and subsequently removed by the dematting blade tips 234. Hence, the pet grooming tool according to this embodiment is suitable for long-, middle- and short-hair pets.

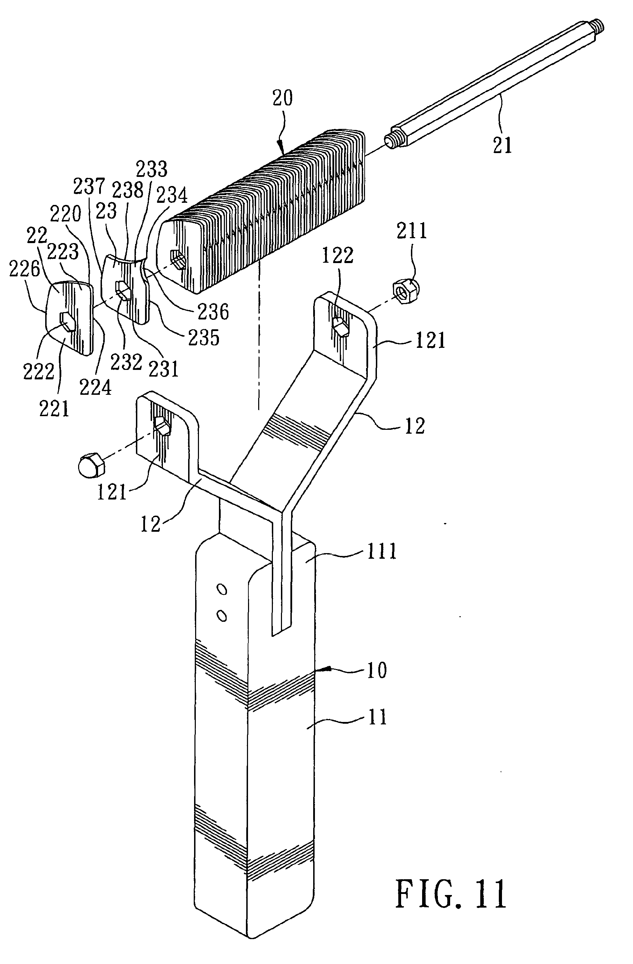

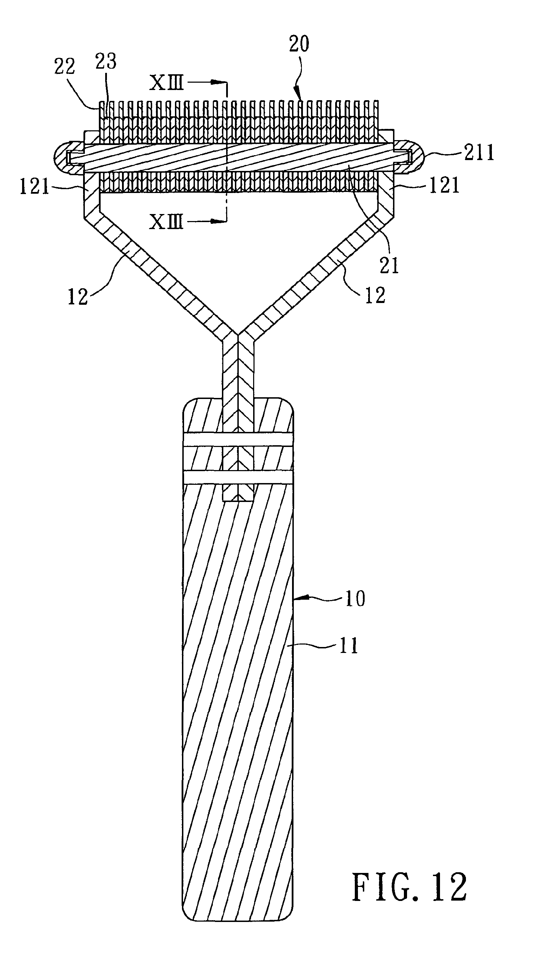

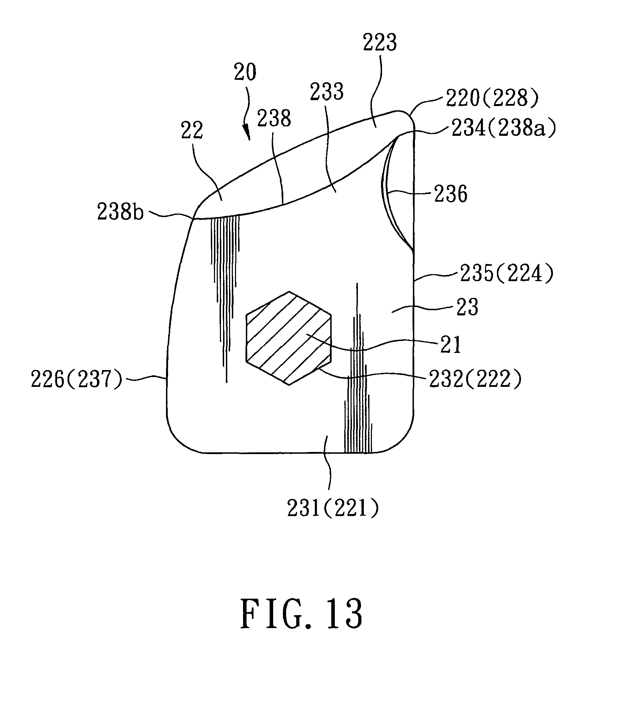

Referring to Figs. 11 to 13, the third embodiment of the pet grooming tool according to this invention is similar to the first embodiment in construction, except that the first front edge surface 224 extends straightly to form the first tine tip 220 in the second transverse direction without provision of the tine cutout portion 225. The pet grooming tool of this embodiment is suitable for short-hair pets.

## Claims

1. A pet grooming tool comprising:
two holding arms (12) respectively having two lug ends (121) which are spaced apart from each other in a first transverse direction;
a mounting shaft (21) extending along a shaft axis in the first transverse direction to terminate at two journals which are respectively secured to said lug ends (121) along the shaft axis; and
a plurality of first tine members (22), each made from a first flat blank which is oriented normal to the shaft axis, and which has first raking and base regions (223, 221) opposite to each other in a longitudinal direction transverse to the first transverse direction, said first flat blank having a first front edge surface (224) which extends from said first base region (221) toward said first raking region (223) in the longitudinal direction to terminate at a front spot (228), and a first rear edge surface (226) which is opposite to said first front edge surface (224) in a second transverse direction that is transverse to the longitudinal and first transverse directions, and which extends from said first base region (221) toward said first raking region (223) to join with said first front edge surface (224) at said front spot (228) to form a first tine tip (220) of a respective one of said first tine members (22), said first base region (221) having a first mounting hole (222) which permits said mounting shaft (21) to be inserted fittingly thereinto such that said first tine members (22) are juxtaposed with one another between said lug ends (121), **characterized in that** said pet grooming tool further comprises:
a plurality of dematting members (23), each made from a second flat blank which has forward and rearward edge surfaces (235, 237) opposite to each other in the second transverse direction, and which is oriented normal to the shaft axis, said second flat blank having dematting blade and mount regions (233, 231) opposite to each other in the longitudinal direction, said dematting blade region (233) extending in the longitudinal direction to terminate at an inclined distal edge surface (238) which joins said forward and rearward edge surfaces (235, 237), respectively, at a forward spot (238a) and a rearward spot (238b) that is closer to said mount region (231) than said forward spot (238a), said dematting blade region (233) having a blade cutout portion (236) which extends from said inclined distal edge surface (238) adjacent to said forward spot (238a) toward said mount region (231) to form a dematting blade tip (234) of a respective one of said dematting members (23), said mount region (231) having a mount bore (232) which permits said mounting shaft (21) to be inserted fittingly thereinto such that each of said first tine members (22) is interposed between two adj acent ones of said dematting members (23), and such that said dematting blade tip (234) is disposed rearward from said first tine tip (220).

2. The pet grooming tool as claimed in Claim 1, **characterized in that** said blade cutout portion (236) is arcuated and concaved rearwardly.

3. The pet grooming tool as claimed in Claim 1, **characterized in that** said first raking region (223) of each of said first tine members (22) has a tine cutout portion (225) which extends immediately from said first tine tip (220) toward said first base region (221) to render said first tine tip (220) more forwardly protruding and to terminate at a first juncture spot (229) on said first front edge surface (224), and which is disposed forwardly from said dematting blade tip (234) and remoter from said first base region (221) than said dematting blade tip (234).

4. The pet grooming tool as claimed in Claim 3, **characterized in that** each of said blade and tine cutout portions (236, 225) is arcuated and concaved rearwardly.

5. The pet grooming tool as claimed in Claim 4, **characterized in that** said first tine tip (220) is rounded.

6. The pet grooming tool as claimed in Claim 4, further **characterized by** a plurality of second tine members (24), each interposed between two adjacent ones of said dematting members (23), and each made from a third flat blank which has second front and rear edge surfaces (243, 247) opposite to each other in the second transverse direction, and which is oriented normal to the shaft axis, said third flat blank having second raking and base regions (242, 241) opposite to each other in the longitudinal direction such that said second front edge surface (243) extends from said second base region (241) toward said second raking region (242) to terminate at a distal spot (248) on said second rear edge surface (247), said second raking region (242) having
an initial cutout portion (244) extending immediately from said distal spot (248) toward said second base region (241) to terminate at a proximate spot (249) on said second front edge surface (243), and
an ending cutout portion (245) extending immediately from said proximate spot (249) toward said second base region (241) to terminate at a second juncture spot (240) which is disposed forwardly from said dematting blade tip (234).

7. The pet grooming tool as claimed in Claim 6, **characterized in that** each of said initial, and ending cutout portions (244, 245) is arcuated and concaved rearwardly.

8. The pet grooming tool as claimed in Claim 1, further **characterized by** a handle (11) which has a connected end (111) connected to said holding arms (121) and which extends from said connected end (111) in the longitudinal direction to be manually operable.

## Patentansprüche

1. Fellpflegewerkzeug für Haustiere, umfassend:
zwei Haltearme (12) mit jeweils einer Endmuffe (121), die in einer ersten Querrichtung voneinander beabstandet sind;
eine Montagewelle (21), die sich in der ersten Querrichtung auf einer Wellenachse erstreckt und am Ende zwei Zapfen aufweist, die jeweils an einer Endmuffe (121) entlang der Wellenachse befestigt werden; und
eine Vielzahl erster Zinkenelemente (22), die jeweils aus einem ersten flachen Rohling hergestellt werden, der senkrecht zu der Wellenachse angeordnet ist, und der jeweils einen ersten Kämm- und einen Basisbereich (223, 221) aufweist, die in Längsrichtung quer zur ersten Querrichtung einander gegenüber liegen, wobei der erste flache Rohling eine erste Vorderkantenfläche (224) aufweist, die sich von dem ersten Basisbereich (221) zu dem ersten Kämmbereich (223) in Längsrichtung erstreckt und an einem vorderen Punkt (228) endet, und eine erste Hinterkantenfläche (226) gegenüber der ersten Vorderkantenfläche (224) in einer zweiten Querrichtung aufweist, die quer zur Längsrichtung und der ersten Querrichtung ist, und die sich von dem ersten Basisbereich (221) zu dem ersten Kämmbereich (223) erstreckt und an dem ersten vorderen Punkt (228) mit der Vorderkantenfläche (224) zusammentrifft und bei jeweils einem ersten Zinkenelement (22) eine erste Zinkenspitze (220) bildet, wobei der erste Basisbereich (221) ein erstes Montageloch (222) aufweist, in welches die Montagewelle (21) passgenau eingeschoben werden kann, so dass die ersten Zinkenelemente (22) nebeneinander zwischen den Endmuffen (121) angeordnet sind, **dadurch gekennzeichnet, dass** das Fellpflegewerkzeug ferner aufweist:
eine Vielzahl von Entfilzungselementen (23), die jeweils aus einem zweiten flachen Rohling bestehen, der vordere und hintere Kantenflächen (235, 237) aufweist, die sich in der zweiten Querrichtung gegenüber liegen, und der rechtwinklig zur Wellenachse angeordnet ist, wobei der zweite flache Rohling eine Entfilzungsklinge und Montagebereiche (233, 231) aufweist, die sich in Längsrichtung gegenüber liegen, wobei der Bereich der Entfilzungsklinge (233), der sich in Längsrichtung erstreckt, an einer distalen schrägen Kantenfläche (238) endet, die mit der vorderen bzw. der hinteren Kantenfläche (235, 237) zusammentrifft, und zwar an einem vorderen Punkt (238a) und einem hinteren Punkt (238b), der näher als der vordere Punkt (238a) zu dem Montagebereich (231) angeordnet ist, wobei der Bereich der Entfilzungsklinge (233) in der Klinge einen Ausnehmungsbereich (236) aufweist, der sich von der zu dem vorderen Punkt (238a) benachbarten, distalen schrägen Kantenfläche (238) zu dem Montagebereich (231) hin erstreckt und auf dem jeweiligen Entfilzungselement (23) eine Entfilzungsklingenspitze (234) bildet, wobei der Montagebereich (231) eine Montagebohrung (232) aufweist, in welchen die Montagewelle (21) passgenau eingeschoben werden kann, so dass die ersten Zinkenelemente (22) jeweils zwischen zwei benachbarten Entfilzungselementen (23) angeordnet sind, und so dass die Entfilzungsklingenspitze (234) hinter der ersten Zinkenspitze (220) angeordnet ist.

2. Fellpflegewerkzeug für Haustiere gemäß Anspruch 1, **dadurch gekennzeichnet, dass** der Ausnehmungsbereich (236) in der Klinge nach hinten gebogen und konkav ausgebildet ist.

3. Fellpflegewerkzeug für Haustiere gemäß Anspruch 1, **dadurch gekennzeichnet, dass** der erste Kämmbereich (223) der ersten Zinkenelemente (22) jeweils einen Zinkenausnehmungsbereich (225) aufweist, der sich unmittelbar von der ersten Zinkenspitze (220) zu dem ersten Basisbereich (221) erstreckt und die erste Zinkenspitze (220) somit weiter nach vorne bringt, so dass sie von einem ersten Verbindungspunkt (229) auf der ersten Vorderkantenfläche (224) vorsteht, und der von der Entfilzungsklingenspitze (234) nach vorne und von dem ersten Basisbereich (221) weiter entfernt angeordnet ist als die Entfilzungsklingenspitze (234).

4. Fellpflegewerkzeug für Haustiere gemäß Anspruch 3, **dadurch gekennzeichnet, dass** die Ausnehmungen (236, 225) der Klinge und der Zinken jeweils nach hinten gebogen und konkav ausgebildet sind.

5. Fellpflegewerkzeug für Haustiere gemäß Anspruch 4, **dadurch gekennzeichnet, dass** die erste Zinkenspitze (220) abgerundet ist.

6. Fellpflegewerkzeug für Haustiere gemäß Anspruch 4, ferner **gekennzeichnet durch** eine Vielzahl zweiter Zinkenelemente (24), die jeweils zwischen zwei benachbarten Entfilzungselementen (23) angeordnet sind, und die jeweils aus einem dritten flachen Rohling hergestellt sind, der jeweils eine zweite vordere bzw. hintere Kantenfläche (243, 247) aufweist, die sich in der zweiten Querrichtung gegenüber liegen und im rechten Winkel zu der Wellenachse angeordnet sind, wobei der dritte flache Rohling einen zweiten Kämm- und Basisbereich (242, 241) aufweist, die sich in Längsrichtung gegenüber liegen, so dass sich die zweite Vorderkantenfläche (243) von dem zweiten Basisbereich (241) zu dem zweiten Kämmbereich (242) erstreckt und an einem distalen Punkt (248) auf der zweiten Hinterkantenfläche (247) erstreckt, wobei der zweite Kämmbereich (242) folgendes aufweist:
einen ersten Ausnehmungsbereich (244), der sich unmittelbar von dem distalen Punkt (248) aus zu dem zweiten Basisbereich (241) erstreckt und an einem proximalen Punkt (249) auf der zweiten Vorderkantenfläche (243) endet, und
einen Endbereich (245) der Ausnehmung, der sich unmittelbar von dem proximalen Punkt (249) aus zu dem zweiten Basisbereich (241) erstreckt und an einem zweiten Verbindungspunkt (240) endet, der vor der Entfilzungsklingenspitze (234) angeordnet ist.

7. Fellpflegewerkzeug für Haustiere gemäß Anspruch 6, **dadurch gekennzeichnet, dass** die Anfangs- und Endbereiche (244, 245) der Ausnehmungen jeweils nach hinten gebogen und konkav ausgebildet sind.

8. Fellpflegewerkzeug für Haustiere gemäß Anspruch 1, ferner **gekennzeichnet durch** einen Griff (11), der ein Anschlussende (111) aufweist, das mit den Haltearmen (121) verbunden ist und das sich von dem Anschlussende (111) aus zur manuellen Bedienung in Längsrichtung erstreckt.

## Revendications

1. Outil pour le toilettage des animaux domestiques, comprenant :
deux bras de maintien (12) ayant respectivement deux extrémités en forme d'ergot (121) espacées l'une de l'autre dans une premier sens transversal ;
une tige de montage (21) s'étendant le long d'un axe de tige dans le premier sens transversal et se terminant en deux tourillons fixés respectivement aux dites extrémités en forme d'ergot (121) dans l'axe de tige ; et
une pluralité de premiers éléments de dents (22), chacun étant constitué à partir d'une première ébauche plate orientée normalement par rapport à l'axe de la tige, et présentant des premières zones de raclage et de base (223, 221) disposées opposées l'une à l'autre dans un sens longitudinal à la transversale du premier sens transversal, ladite première ébauche plate ayant une première surface de bord avant (224) s'étendant de ladite première zone de base (221) vers ladite première zone de raclage (223) dans le sens longitudinal pour se terminer en un point frontal (228), et une première surface de bord arrière (226) opposée à ladite première surface de bord avant (224) dans un second sens transversal disposé à la transversale du sens longitudinal et du premier sens transversal, et s'étendant de ladite première zone de base (221) vers ladite première zone de raclage (223) pour rejoindre ladite première surface de bord avant (224) au dit point frontal (228) afin de former une première pointe de dent (220) d'un desdits premiers éléments de dents (22), ladite première zone de base (221) présentant un premier orifice de montage (222) permettant à ladite tige de montage (21) d'y être insérée adéquatement de sorte que lesdites premières dents (22) soient juxtaposées les unes aux autres entre lesdites extrémités en forme d'ergot (121), **caractérisé en ce que** ledit outil pour le toilettage des animaux domestiques comprend en outre :
une pluralité d'éléments de démêlage (23), chacun étant constitué à partir d'une seconde ébauche plate présentant des surfaces avant et arrière (235, 237) opposées l'une à l'autre dans le second sens transversal, et orientée normalement par rapport à l'axe de la tige, ladite seconde ébauche plate ayant une lame de démêlage et des zones de support (233, 231) opposées les unes aux autres dans le sens longitudinal, ladite zone de lame démêlante (233) s'étendant dans le sens longitudinal pour se terminer en un plan de bord distal incliné (238) qui rejoint lesdites surfaces de bord avant et arrière (235, 237), respectivement en un point avant (238a) et en un point arrière (238b) plus proche de ladite zone de support (231) que ledit point avant (238a), ladite zone de lame démêlante (233) présentant une partie encochée de lame (236) qui s'étend dudit plan de bord distal incliné (238) adjacent audit point avant (238a) vers ladite zone de support (231) afin de former une pointe de lame de démêlage (234) d'un desdits éléments de démêlage (23), ladite zone de support (231) ayant un orifice de montage (232) permettant à ladite tige de montage (21) d'y être insérée adéquatement de sorte que chacune desdites premières dents (22) soit interposée entre deux desdits éléments de démêlage (23), et de sorte que ladite pointe de lame de démêlage (234) soit disposée à l'arrière de ladite première pointe de dent (220).

2. Outil pour le toilettage des animaux domestiques selon la revendication 1, **caractérisé en ce que** ladite partie encochée de la lame (236) est arquée et concave sur l'arrière.

3. Outil pour le toilettage des animaux domestiques selon la revendication 1, **caractérisé en ce que** ladite première zone de raclage (223) de chacun desdits premiers éléments de dents (22) a une partie de dent encochée (225) s'étendant immédiatement de ladite première pointe de dent (220) à ladite première zone de base (221) pour faire saillir ladite première pointe de dent (220) de façon plus prononcée vers l'avant et pour se terminer en un premier point de jonction (229) sur la première surface de bord avant (224), et qui est disposée plus en avant que ladite pointe de lame de démêlage (234) et à plus grande distance de ladite première zone de base (221) que ladite pointe de lame de démêlage (234).

4. Outil pour le toilettage des animaux domestiques selon la revendication 3, **caractérisé en ce que** chacune desdites parties encochées de lame et de dent (236, 225) est arquée et concave sur l'arrière.

5. Outil pour le toilettage des animaux domestiques selon la revendication 4, **caractérisé en ce que** ladite première pointe de dent (220) est arrondie.

6. Outil pour le toilettage des animaux domestiques selon la revendication 4, **caractérisé en outre par** une pluralité de seconds éléments de dents (24), chacun étant interposé entre deux membres adjacents desdits éléments de démêlage (23), et chacun étant constitué à partir d'une troisième ébauche plate avec des secondes surfaces de bord avant et arrière (243, 247) opposées les unes aux autres dans le second sens transversal, et ladite ébauche étant orientée normalement par rapport à l'axe de tige, ladite troisième ébauche plate ayant des secondes zones de démêlage et de base (242, 241) opposées les unes aux autres dans le sens longitudinal de sorte que ladite seconde surface de bord avant (243) s'étend de ladite seconde zone de base (241) vers ladite seconde zone de démêlage (242) pour se terminer en un point distal (248) sur ladite seconde surface de bord arrière (247), ladite seconde zone de démêlage (242) comprenant
une partie encochée initiale (244) s'étendant immédiatement dudit point distal (248) vers ladite seconde zone de base (241) pour se terminer en un point à proximité (249) sur ladite seconde surface de base avant (243), et
une partie encochée de fin (245), s'étendant immédiatement dudit point à proximité (249) vers ladite seconde zone de base (241) pour se terminer en un second point de jonction (240) disposé plus en avant que ladite pointe de lame de démêlage (234).

7. Outil pour le toilettage des animaux domestiques selon la revendication 6, **caractérisé en ce que** chacune desdites parties encochées initiale et de fin (244, 245) est arquée et concave sur l'arrière.

8. Outil pour le toilettage des animaux domestiques selon la revendication 1, **caractérisé en outre par** une poignée (11) présentant une fin connectée (111) reliée auxdits bras de maintien (121) et s'étendant à partir de ladite fin connectée (111) dans le sens longitudinal pour être actionnée manuellement.
